(19) Europäisches Patentamt
European Patent Office
Office européen des brevets

(11) **EP 4 212 277 B1**

(12) **EUROPEAN PATENT SPECIFICATION**

(45) Date of publication and mention
of the grant of the patent:
**05.08.2026   Bulletin 2026/32**

(21) Application number: **21893896.7**

(22) Date of filing: **16.11.2021**

(51) International Patent Classification (IPC):
**B23K 26/064** *(2014.01)*     **G02B 6/32** *(2006.01)*
**H01S 3/02** *(2006.01)*     **G02B 6/42** *(2006.01)*

(52) Cooperative Patent Classification (CPC):
**G02B 27/0927; G02B 6/4296**

(86) International application number:
**PCT/CN2021/130917**

(87) International publication number:
**WO 2022/105749 (27.05.2022 Gazette 2022/21)**

(54) **LASER OUTPUT OPTICAL CABLE**

OPTISCHES KABEL MIT LASERAUSGANG

CÂBLE OPTIQUE À SORTIE LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **17.11.2020   CN 202011287324**

(43) Date of publication of application:
**19.07.2023   Bulletin 2023/29**

(73) Proprietor: **Wuhan Raycus Fiber Laser
Technologies Co., Ltd
East Lake Hi-Tech Development Zone
Wuhan, Hubei 430073 (CN)**

(72) Inventors:
• **LI, Rong**
  **Wuhan, Hubei 430073 (CN)**
• **ZHAO, Wenli**
  **Wuhan, Hubei 430073 (CN)**
• **SHEN, Xiang**
  **Wuhan, Hubei 430073 (CN)**
• **LEI, Xing**
  **Wuhan, Hubei 430073 (CN)**
• **SHI, Jianhong**
  **Wuhan, Hubei 430073 (CN)**
• **HUANG, Zhongya**
  **Wuhan, Hubei 430073 (CN)**
• **SONG, Liang**
  **Wuhan, Hubei 430073 (CN)**
• **LU, Xiaocong**
  **Wuhan, Hubei 430073 (CN)**
• **LI, Cheng**
  **Wuhan, Hubei 430073 (CN)**
• **YAN, Dapeng**
  **Wuhan, Hubei 430073 (CN)**

(74) Representative: **Osterhoff, Utz
Bockermann Ksoll
Griepenstroh Osterhoff
Patentanwälte
Bergstraße 159
44791 Bochum (DE)**

(56) References cited:
CN-A- 108 562 976         CN-A- 110 323 658
CN-A- 111 122 127         CN-A- 111 299 850
CN-A- 112 605 525         CN-U- 207 837 511
CN-U- 209 016 423         CN-U- 209 029 669
CN-U- 210 334 786         DE-U1- 202015 101 457
DE-U1- 202015 101 457     US-A1- 2020 124 806

EP 4 212 277 B1

## Description

## TECHNICAL FIELD

The present disclosure relates to the technical field of optics, in particular to a laser output optical cable.

## BACKGROUND

Laser processing has unique advantages in the field of industrial manufacturing. In recent years, fiber lasers have emerged in the laser processing market due to their good beam quality, flexible medium output, high stability and low processing costs. With the expansion of the fiber laser market, the maximum output power of fiber laser is also increasing rapidly.

With the increase of power, especially after breaking through ten thousands watts and reaching tens of thousands of watts, some shortcomings of fiber lasers in the cutting field occur, for example, when multi-mode lasers cut thick plates, the stripe depth of the cutting surface of the cut plates is inconsistent, and when a large defocus is used, the nozzle of the cutting head is heats up to be deformed violently, or even be burnt out.

In view of this, it is urgent to provide a lightweight, safer and more reliable laser output optical cable to effectively filter out trailing laser light or stray light in the laser output from the output optical cable, to achieve high-quality, high-safety cutting.

US20200124806A1 discloses an apparatus for coupling out radiation from an optical fiber, which includes a housing, and a stop having a stop opening for delimiting an output coupling angle of radiation that is coupled out of an output end of the optical fiber to a maximum output coupling angle with respect to a central axis of the stop opening, wherein the stop is arranged in the housing. The stop has a stop body made from a transparent material, the stop body has a first total internal reflection face for reflecting radiation that is coupled out of the output end of the optical fiber with greater output coupling angles than the maximum output coupling angle, and the stop body has a second total internal reflection face for reflecting radiation that propagates opposite to the radiation coupled out of the output end and is reflected back by a workpiece.

CN210334786U provides a laser beam machining head with miscellaneous light absorption chamber, including barrel and the optical fiber splice of setting inside the barrel, inside light absorption chamber and the collimating lens of having set gradually along the laser emission direction of barrel, the light absorption chamber is including heat dissipation chamber, first diaphragm and second diaphragm fixed mounting are both ends about the heat dissipation chamber respectively, just first diaphragm and second diaphragm central part have the through-hole that can supply laser to pass. The utility model discloses simple structure, the practicality is high, can effectively restrain the temperature rise phenomenon that causes by reflecting the veiling glare.

## SUMMARY

The embodiments of the present disclosure provide a laser output optical cable. Since a spacial diaphragm in the optical path is added, the stray light in the output laser is filtered out, to effectively improve the quality of the output laser and lower the temperature of the output head.

The embodiment of the present invention provides a laser output optical cable, which includes a power delivery fiber, and a laser cutting head connector connecting the laser output head and the laser cutting head; the laser output head includes an end cap; at least one spacial diaphragm is provided in the laser cutting head connector; an aperture of the spacial diaphragm is determined based on a distance between a virtual light-emitting point and the spacial diaphragm and a divergence angle of a laser output beam after passing through the end cap; the virtual light-emitting point is determined based on a length of the end cap in the optical path and the effective refraction rate of its material.

In the embodiment of the present invention, a first diverging hole is provided on and passed through the spacial diaphragm; the laser output beam is incident into a large-diameter end of the first diverging hole along a radial line of the first diverging hole, and is emitted from a small-diameter end of the first diverging hole.

In the embodiment of the present invention, an aperture of the small-diameter end of the first diverging hole is calculated by a formula:

$$D=2\times\tan\theta\times L;$$

D is the aperture of the small-diameter end of the first diverging hole; $\theta$ is the divergence angle of the laser output beam after passing through the end cap; L is a distance from the virtual light-emitting point to the spacial diaphragm; and an aperture of the large-diameter end of the first diverging hole is smaller than an aperture of the cutting head connector.

In an embodiment, at least one annular light-absorbing groove is provided in a middle of an inner wall of the spacial diaphragm, and the annular light-absorbing groove is inclined at a preset angle to the optical path.

In an embodiment, tapered surfaces of both sides of the annular light-absorbing groove and/or an inner wall of the spacial diaphragm are provided with a concave structure or a light-absorbing thread, and are coated with a light-absorbing material.

In an embodiment, the spacial diaphragm further includes a second diverging hole provided in the optical path; a small-diameter end of the second diverging hole is overlapped with the small-diameter end of the first diverging hole; and an inner wall of the second diverging hole is provided with a concave structure or a light-absorbing thread, and is coated with a light-absorbing material.

In an embodiment, an incident light focus of a collimation unit is overlapped with the virtual light-emitting point, and the spacial diaphragm is integrally with the cutting head connector.

In an embodiment, a heat dissipation structure with multiple water channel fins is provided on an outer wall of the spacial diaphragm.

In an embodiment, the laser output optical cable further includes a connection barrel of a hollow structure, the spacial diaphragm is connected to the connection barrel by set screws to form a spacial diaphragm unit; a water inlet and a water outlet are provided on a surface of the connection barrel, and a water-cooling joint is provided at each of the water inlet and the water outlet; and the spacial diaphragm unit is detachably connected to the laser output head.

In an embodiment, the laser output optical cable further includes a lock nut provided on the cutting head connector; an internal thread is provided inside the lock nut for matching with an external thread of the laser output head; a pin is provided at an end of the laser output head close to the cutting head connector; and a main controller of the cutting head connector is provided with a pin hole corresponding to the pin.

The laser output optical cable provided by the embodiment of the present invention is used to filter out a part of the beam larger than the aperture, especially the trailing part of the light spot by adding a spacial diaphragm in the laser cutting head connector between a collimation unit of the cutting head and the laser output head, such that the incidental thermal effect of the nozzle is greatly reduced, the cutting effect is effectively improved, and the safe operation of the laser equipment is ensured.

## BRIEF DESCRIPTION OF THE DRAWINGS

In order to more clearly illustrate the technical solutions in the embodiments of the present disclosure or in the related art, drawings used in the embodiments or in the related art will be briefly described below. Obviously, the drawings in the following description are only some embodiments of the present disclosure. It will be apparent to those skilled in the art that other figures can be obtained according to the structures shown in the drawings without creative work.

FIG. 1 is a schematic view of an energy distribution of various beams and an effective light spot according to embodiments of the present disclosure.
FIG. 2 is a schematic view of a working principle of a laser output optical cable according to the embodiments of the present disclosure.
FIG. 3 is a schematic structural view of an inside of a spacial diaphragm according to the embodiments of the present disclosure.
FIG. 4 is a schematic view of a working principle of the spacial diaphragm according to the embodiments of the present disclosure.
FIG. 5 is a schematic view of a divergence angle corresponding to different energy percentages of a laser output beam spot according to the embodiments of the present disclosure.
FIG. 6 is a schematic structural view of an inside of a connector integrated with the spacial diaphragm according to the embodiments of the present disclosure.
FIG. 7 is a schematic view of a water channel structure of the spacial diaphragm according to the embodiments of the present disclosure.
FIG. 8 is a schematic structural view of a spacial diaphragm unit according to the embodiments of the present disclosure.
FIG. 9 is a schematic structural view of a connector integrated with the spacial diaphragm in an output optical cable according to the embodiments of the present disclosure.
FIG. 10 is a schematic structural view of a ten thousands watts high-power output optical cable according to the embodiments of the present disclosure.
FIG. 11 is a schematic structural view of a simplified output optical cable integrated with a spacial diaphragm according to the embodiments of the present disclosure
FIG. 12 is a schematic structural view of the ten thousands watts high-power output optical cable with a simplified connection method according to the embodiments of the present disclosure.
FIG. 13 is a schematic structural view of a main part of a cutting head according to the embodiments of the present disclosure.
FIG. 14 is a schematic structural view of a lock nut according to the embodiments of the present disclosure.

Reference signs: 201-laser cutting head; 202-cutting head connector; 203-laser output head; 204-spacial diaphragm; 205-nozzle; 206-processed plate; 401-end cap; 402-power delivery fiber; 403-virtual light-emitting point; 405-original laser spot energy distribution of laser output; 406-spot energy distribution after passing through the spacial diaphragm; 511-ten thousands-watts high-power output head; 512-new type output optical cable with function of spacial diaphragm; 519-first diverging hole; 516-pin; 517-external thread of the laser output head; 520-annular light-absorbing groove; 521-small-diameter end of the spacial diaphragm; 522-second diverging hole; 523-external thread of connection barrel; 524-sealer; 525-sealer; 527-water channel structure of spacial diaphragm; 528-connection barrel; 529-spacial diaphragm unit; 530-water-cooling joint; 531-lock nut; 533-main body of the laser cutting head; 534-notch; 535-internal thread of lock nut; 536-pin hole; 537-connector; 538-connector of integrated spacial diaphragm.

## DETAILED DESCRIPTION OF THE EMBODIMENTS

In order to make the objectives, technical solutions and advantages of the embodiments of the present disclosure clearer, the technical solutions in the embodiments of the present disclosure will be clearly and completely described below with reference to the drawings in the embodiment of the present disclosure. Obviously, the described embodiments are only a part of the embodiments of the present disclosure, not all of the embodiments. Based on the embodiments in the present disclosure, all other embodiments perceived by those ordinary skills in the art without creative effort should be fallen within the protection scope of the present invention, which is defined by the appended claims.

At present, the optical fiber lasers are mainly applied on the plate cutting, and requires mostly for ten-thousands watts lasers. In practical applications, especially in high-power laser cutting, the material to be cut has a certain damage threshold, which means that only when the energy density reaches a certain intensity can cut the material better.

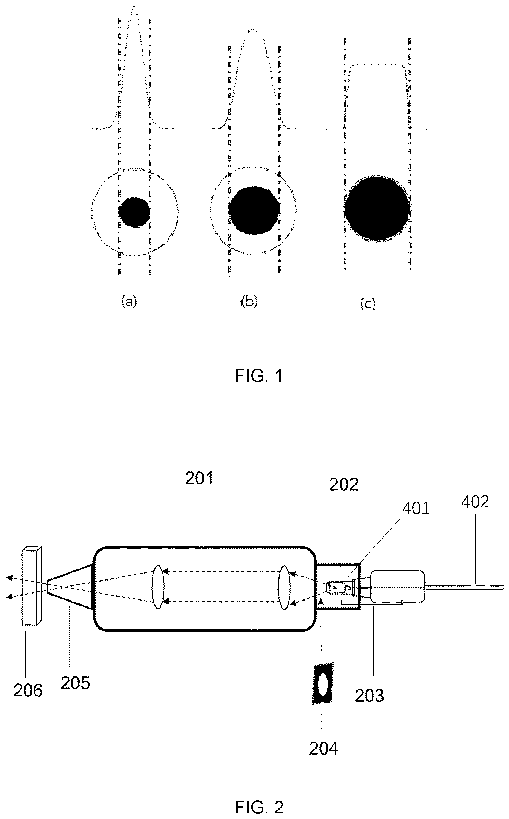

FIG. 1 is a schematic view of an energy distribution of various beams and an effective light spot according to embodiments of the present disclosure. For beams of different modes, the relationship between the energy density and the diameter of the spot is different. For example: the diameter of the spot with 86.5% of the total energy is set as "a", and the diameter of the spot with 100% of the total energy is set as "A". As shown in (a) of FIG. 1, for the spot of a Gaussian beam, A≈2a, it indicates that the energy intensity from the beam center to the edge changes gradually, but the change is relatively gentle; as shown in (b) of FIG. 1, for the spot of a tophat beam, A≈a, it indicates that the energy intensity from the center to the edge drops suddenly, and the change is large; as shown in (c) of FIG. 1, for Gaussian-like beams, the variation trend of the spot intensity is between the Gaussian beam and tophat beam, and proportions between A and a of different Gaussian-like beams are different, but they all satisfy the following relationship: a<A<2a.

Therefore, the energy density in the central area of the Gaussian beam is relatively high, but since the intensity from the center to the edge changes gradually, the energy has a large trail, and this part of energy not only has little effect on cutting, but also causes additional thermal effects, as shown in (a) of FIG. 1, the black area is the effective area, and the white area is the trailing area, so that the slits are narrow and the cutting residues are not easy to be blown away by the auxiliary airflow when cutting thick plates with high-power lasers, and a strong thermal effect is produced on the edge of the cutting surface.

The energy density from the center area of tophat beam change to the edge changes very violently, there is basically no trailing of the light spot, and the effective area of the light spot is large, which makes the tophat beam more suitable for thick plate cutting. However, under the same total power, the energy density in the central area of the tophat beam is only half of that of the Gaussian spot, which means that the cutting speed of the tophat beam is slower, and the spot energy distribution of the tophat beam is a tophat distribution only at the focal point, and is still a Gaussian-like distribution at the far focus position.

To sum up, for thick plate cutting, the energy distribution of the light spot on the surface of the plate is generally a Gaussian-like spot, which has a higher central energy distribution than the tophat beam and a smaller trailing compared to the Gaussian beam.

Further, there is a nozzle at the bottom of the cutting head, which is used to output cutting auxiliary airflow coaxial with the laser beam. Since the auxiliary airflow needs to reach a relatively high flow velocity, which requires a small outlet diameter of the nozzle, and the outlet diameter is generally slightly larger than the diameter of the beam spot at the plane.

Due to the above characteristics of the Gaussian-like beam, it still has a small trail when cutting the processed plate. Due to the different energy distribution of different lasers, the shape of the Gaussian-like beam is also different. Generally speaking, when using a large defocus to cut a plate, once the 100 % energy light spot diameter of a certain laser is equal to or greater than the nozzle size, it will cause the nozzle to heat up and affect the cutting effect; while using a small defocus, since the kerf is narrow, the effect of the auxiliary air flow is limited, high-quality cutting cannot be completed, thus the application range of the laser will be limited.

According to the above defects in the existing laser cutting process, the embodiments of the present disclosure provide a laser output optical cable. FIG. 2 is a schematic view of working principle of a laser output optical cable according to the embodiments of the present disclosure. As shown in FIG. 2, the laser output cable mainly includes: a power delivery fiber 402 and a laser cutting head connector 202 connecting a laser output head 203 and a laser cutting head 201, the power delivery fiber 402 and the laser cutting head connector 202 are sequentially connected on an optical path; the laser output head 203 includes an end cap 401; the laser cutting head 201 includes a collimation unit, and at least one spacial diaphragm is provided between the laser cutting head connector 202; an aperture of the spacial diaphragm 204 is determined based on a distance between a virtual light-emitting point and the spacial diaphragm 204 and a divergence angle of an output beam of a laser after passing through the end cap 401; the virtual light-emitting point is determined based on the end cap 401.

In the laser output optical cable provided by the embodiments of the present disclosure, compared with the traditional output optical cable structure, a spacial diaphragm 204 is added in the laser cutting head connector 202 between the laser output head and the collimation unit, the light beam is output through the laser and transmitted by the power delivery fiber 204, the actual light-emitting point is refracted by the end cap 401 in the laser output head 203 to generate an energy light spot. In the traditional laser output optical cable, the energy light spot will directly enter the collimation unit in the cutting head for collimation and then focusing, and directly cut the processed plate 206.

However, according to the content described in the above embodiments, on the one hand, there are many trailing lasers or stray lasers in the energy light spot generated after refraction by the end cap 401, and these trailing lasers or stray lasers will generate heat after entering the laser cutting head 201, and even burn the laser cutting head 201 directly. On the other hand, if the diameter of the energy light spot of the laser is equal to or greater than the size of the nozzle 205, it will cause the nozzle 205 to heat up, to affect the cutting effect; and the small defocus causes a narrower slit, and the effect of the auxiliary airflow is limited, thus it is unable to complete the high-quality cutting.

Due to the existence of the above technical requirements, the embodiments of the present disclosure not only can effectively filter out the trailing laser or stray laser existing in the energy light spot, but also can control the size of the energy light spot by adjusting the aperture of the spacial diaphragm 204.

In an embodiment of the present invention, if a certain laser needs to filter out 98% to 100 % of the light spot energy in the emitted laser output beam, then the aperture D of the spacial diaphragm 204 can be determined according to the divergence angle $\theta$ corresponding to 98% of the total energy of the corresponding light spot in the beam, the distance L between the spacial diaphragm 204 and the virtual light-emitting point. By adding the spacial diaphragm 204, the part of the beam larger than the aperture is blocked by the diaphragm, and cannot be transmitted to the nozzle to cause the nozzle to heat up, and since the trailing part of the light spot is filtered, the incidental thermal effect withstood by the material is sharply decreased.

Further, the above divergence angle $\theta$ refers to a divergence angle of the laser beam after passing through the end cap 401, and the virtual light-emitting point is generally determined by the length of the end cap 401 in the optical path and the effective refraction rate of its material.

It should be noted that in each of the embodiments of the present disclosure, a spacial diaphragm 204 is provided in the optical path between the laser output head 203 and the collimation unit of the laser cutting head 201 as an example for illustration, which is not regarded as a specific limitation on the embodiments of the present disclosure.

In an embodiment, a plurality of spacial diaphragms with different apertures may be provided, and the spacial diaphragms 204 with different apertures are sequentially provided on the optical path between the laser output head 203 and the collimating units of the cutting head 201 according to the size of the aperture from large to small. The spacial diaphragm 204 with the smallest aperture is the same as the aperture with only a single spacial diaphragm 204 in the above embodiment. In the embodiments of the present disclosure, by providing a plurality of spacial diaphragm with different apertures, the trailing light and stray light of the light spot in the laser beam are filtered out in grading, so as to overcome the excessively harsh requirements for the absorption and heat dissipation of a single spacial diaphragm, which leads to impractical defects.

By adding a spacial diaphragm in the cutting head connector between the cutting head collimation unit and the laser output head, the laser output optical cable provided in the embodiment of the present disclosure may filter out part of the beam larger than the aperture, especially the trailing part of the light spot, which greatly reduces the incidental thermal effect on the nozzle, effectively improves the cutting effect and ensures the safe operation of the laser equipment.

In an embodiment, a first diverging hole is provided on and passed through the spacial diaphragm 204; the laser output beam is incident into the large-diameter end of the first diverging hole along a radial line of the first diverging hole, and is emitted from a small-diameter end of the first diverging hole.

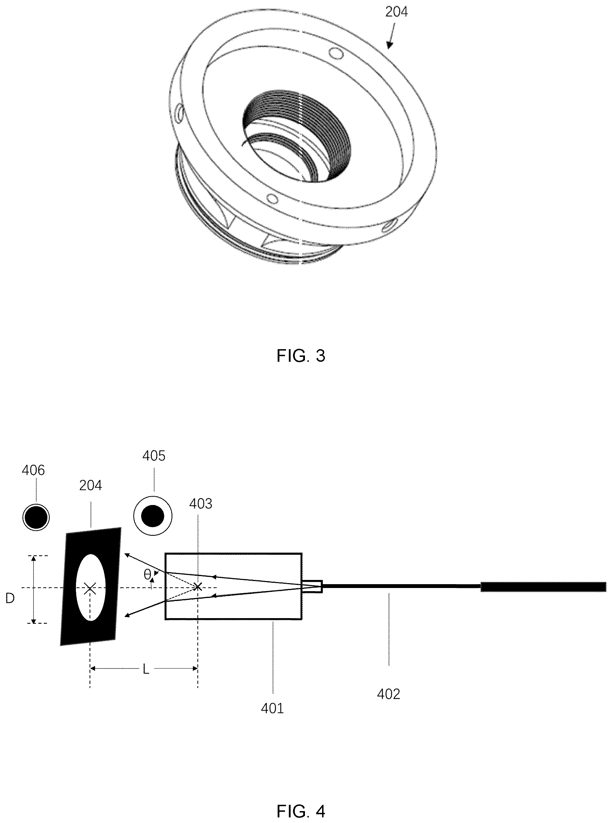

FIG. 3 is a schematic structural view of an inside of a spacial diaphragm according to the embodiments of the present disclosure. As shown in FIG. 3, the laser output optical cable provided by the embodiment of the present disclosure adopts a grading absorption structure in the design of the spacial diaphragm, in order to avoid the single-point absorption of the trailing light by the spacial diaphragm 204 to cause the diaphragm to be partially overheated and destroyed.

As shown in FIG. 3, since the entire spacial diaphragm is set as a frustum structure, a first diverging hole is provided inside and passed through the frustum structure. When the laser output beam enters from the large-diameter end of the first diverging hole, a tapered hole wall of the first diverging hole gradually shrinks, and the trailing light far from the focus point of the beam in the laser output beam is gradually absorbed in grading.

In an embodiment, a water path or an air path may be provided in the controller diaphragm to cool down the controller diaphragm by cooling water or cooling gas.

The laser output optical cable provided in the embodiment of the present disclosure is provided with a three-dimensional spacial diaphragm to design a tapered diverging hole that is passed through in the spacial diaphragm to realize a layer-by-layer absorption of the annular trailing light, which effectively disperses the heat generated from laser absorption, avoids the partial overheating and damage of the spacial diaphragm, and effectively boosts the absorption efficiency of trailing light and stray light, improves the cutting effect, and guarantees a safe operation of the laser equipment.

In an embodiment, as shown in FIG. 2, the laser output optical cable provided by the embodiment of the present disclosure may further include a cutting head connector 202, the spacial diaphragm 204 is fixed in the cutting head connector 202; the cutting head connector 202 is provided between the laser output head 203 and the laser cutting head 201, and is used for fixing the laser output head 202 and the laser cutting head 201.

The diameter of the small-diameter end of the first diverging hole is:

$$D = 2 \times \tan\theta \times L;$$

$D$ is the diameter of the small-diameter end of the first diverging hole; $\theta$ is the divergence angle of the laser output beam after passing through the end cap; L is the distance between the virtual light-emitting point and the spacial diaphragm; and the diameter of the large-diameter end of the first diverging hole is smaller than an diameter of the cutting head connector.

Due to the different divergence angles of the output light of different manufacturers and different laser models, a cutting head connector 202 with a diaphragm device can be intentionally provided at the end of the laser output head 203 for different models of lasers. When the cutting head connector 202 is mated with or integrated with the laser output head 203, the installation and fixation of the spacial diaphragm 204 can also be realized. Correspondingly, in the laser cutting head 201 and the mechanical structure of the cutting head connector 202 for matching connection, the embodiment of the present disclosure does not specify which connection method is used to connect the laser output head 203, the cutting head connector 202 and the laser output head 202, for example, a threaded connection, a buckle connection, etc.

Furthermore, when each device of the laser output optical cable is fixedly connected and it should ensures that after connection, the virtual light-emitting point of the laser output head 203 matches the collimation unit in the laser cutting head, that is, it is necessary to ensure that the incident light focus of the collimation unit is overlapped with the virtual light-emitting point 403.

FIG. 4 is a schematic view of working principle of the spacial diaphragm according to the embodiments of the present disclosure, which shows the original light spot energy distribution 405 of the laser and the light spot energy distribution 406 after passing through the spacial diaphragm. The ten-thousands watts level laser transmission optical cable is in a form of combining the end cap 401 with the power delivery fiber 402, and its light-emitting point is an end surface of the power delivery fiber 402, but since the end cap 401 is made of silica material, whose refractive rate is greater than that of air, when the output beam enters the air from the end cap 401, it will be refracted, and finally forms a virtual light-emitting point 403.

The aperture of the spacial diaphragm 204 is related to both the divergence angle of the laser output light and the distance of the virtual light-emitting point. The aperture of the first diverging hole is calculated by a formula:

$$D = 2 \times \tan\theta \times L;$$

$D$ is the aperture of the small-diameter end of the first diverging hole; $\theta$ is the divergence angle of the laser output beam after passing through the end cap; L is the distance between the virtual light-emitting point and the spacial diaphragm. For example, for a certain laser, it is required to filter out 98% to 100% of the light spot energy, supposing that the divergence angle corresponding to 98% of the total energy of the light spot corresponding to the output beam of this laser is $\theta$, the distance between the spacial diaphragm 204 and the virtual light-emitting point is determined to be L (the length L1 of the virtual light-emitting point from a coating surface of the end cap equates the length of the end cap or the effective refractive rate of the end cap material, the distance between the diaphragm and the coating surface of the end cap is $L2$, $L = L1 + L2$) according to the overall structural requirements, then the part of the beam larger than the aperture is blocked by the diaphragm, and cannot be transmitted to the nozzle 205, causing the nozzle to heat up. Since the trailing part of the light spot is filtered, the incidental thermal effect on the material is greatly reduced.

The embodiments of the present disclosure further provide a method for determining the divergence angle $\theta$, for the light spot corresponding to the same output beam, the corresponding divergence angle $\theta$ will be quite different according to the energy of the light spot to be filtered.

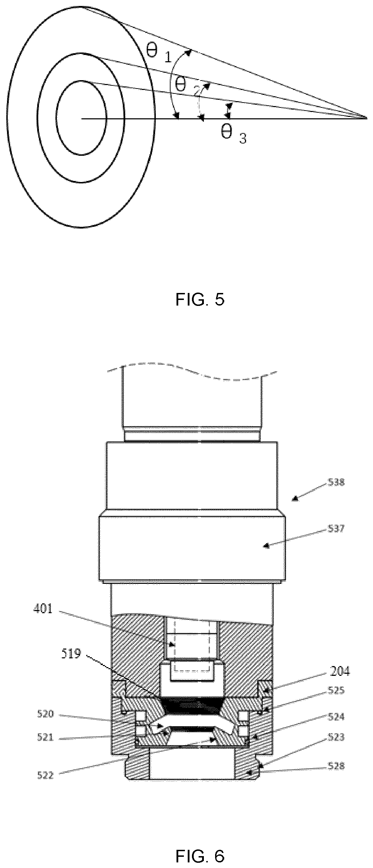

FIG. 5 is a schematic view of a divergence angle corresponding to different energy percentages of a laser output beam spot according to the embodiments of the present disclosure. As shown in FIG. 5, a total power of the laser is 12000W, and its 100% energy divergence angle $\theta_1$ is 0.12 rad, 99% energy divergence angle $\theta_2$ is 0.117 rad, and 98% energy divergence angle $\theta_3$ is 0.112 rad. If it is necessary to use the spacial diaphragm to filter out 98% to 100% of the light spot energy, then $\theta = \theta_3 = 0.112$ rad can be determined.

Since the divergence angles $\theta$ of different models of lasers are different, and the laser cutting head 201 is provided with a diaphragm unit 204 between the collimation unit and the laser output head 203, but the diaphragm unit 204 of the same model of the cutting head cannot perfectly match different models of lasers from various manufacturers, thus it is necessary to intentionally design the diaphragm device. Assuming that the axial distance L between the small-diameter end of the first diverging hole of the spacial diaphragm 204 and the virtual light-emitting point 403 is 34mm, then according to the calculation formula of the aperture at the small-diameter end of the first diverging hole, combined with the value of the energy divergence angle $\theta$, it can be calculated that the aperture $D$ of the small-diameter end equals 7.65mm.

Furthermore, when a laser is used for material processing, some reflections will occur on the surface of the material, among which carbon steel and stainless steel have low reflectivity, while aluminum, copper and other materials have high reflectivity. According to the reversibility of the optical path, the reflected light will return to the laser output head 203, but due to the influence of the surface flatness of the material, the divergence angle of the reflected light will be greater than that of the forward laser. For a joint of the cutting head connector 202 connected to the laser output head 203 on the laser cutting head 201, the aperture of the joint is equivalent to a diaphragm, but this diaphragm has a larger diameter, which can be used to block and absorb a part of the light reflected by the processed material, and does not block the forward light. After the spacial diaphragm 204 provided in the embodiment of the disclosure is introduced into the cutting head connector 202, the aperture of the spacial diaphragm 204 should be smaller than the apertureof the joint of the cutting head connector 202, then the spacial diaphragm 204 provided in the embodiments of the present disclosure can not only block part of the forward laser, but also effectively block part of the reflected light. That is, the aperture of the large-diameter end can be determined according to the aperture of the joint of the cutting head connector 202.

After the aperture of the large-diameter end and the aperture of the small-diameter end of the spacial diaphragm 204 are determined, the entire spacial diaphragm 204 can be designed. In an embodiment, the length of the spacial diaphragm 204 in the direction of the optical path can be appropriately increased (subject to shorter than the total length of the cutting head connector 202 and does not affect the connection function of the cutting head connector 202), so as to effectively dissipate the heat generated by the absorption of the laser.

The embodiments of the present disclosure provide a design and installation method of a spacial diaphragm. The provided spacial diaphragm can effectively filter out part of the light beam larger than the aperture, especially the trailing part of the light spot, so that the incidental thermal effect on the nozzle is greatly reduced, which effectively improves the cutting effect and ensures the safe operation of the laser equipment.

In an embodiment, at least one annular light-absorbing groove is provided in the middle of the inner wall of the spacial diaphragm; the annular light-absorbing groove is inclined at a preset angle to the direction of the optical path.

FIG. 6 is a schematic structural view of an inside of a connector integrated with the spacial diaphragm according to the embodiments of the present disclosure. As shown in FIG. 6, 401 marks the end cap of the output optical cable, 520 marks the annular light-absorbing groove of the spacial diaphragm, and thread of tapered surfaces on two sides of the annular light-absorbing groove 520 are on the same plane, and the surface is processed with fine-tooth light-absorbing threads, and the fine-tooth light-absorbing threads are sandblasted and textured.

The small-diameter end 521 of the spacial diaphragm is the minimum diameter of the spacial diaphragm, which is calculated according to this formula $D=2\times\tan\theta\times L$, and most of the energy of the light spot part greater than the divergence angle $\theta$ is absorbed by the light-absorbing thread 519 and the annular light-absorbing groove 520.

Further, the annular section of the blocked light beam can be calculated according to the minimum divergence angle and the maximum divergence angle required to block the light. In order to avoid the blocked forward light from returning to the laser output head 203 after hitting the light-blocking annular section, the inner wall of the first diverging hole 519 in the entire annular section is designed as a tapered surface, and the tapered opening is in the light emitting direction.

Further, in the embodiment of the present disclosure, a section of an annular light-absorbing groove 520 with angle is designed in the middle of the tapered inner wall of the first diverging hole 519 of the spacial diaphragm 204. The surface of the annular light-absorbing groove 520 is processed in light-absorbing treatments such as roughening and blackening, and during the design process, the annular light-absorbing groove 520 is properly inclined to the optical path at a preset angle, which can effectively ensure that once the blocked forward light enters the annular light-absorbing groove 520, it will be scattered and absorbed multiple times in the groove. The small-diameter end corresponding to the minimum divergence angle can be designed as an R shape to reduce the risk of tip heating.

In an embodiment, the annular light-absorbing groove may be provided only in one circle or multiple circles spaced from each other according to actual requirement, so as to improve the absorption efficiency of the blocked forward light.

The laser output optical cable provided by the embodiment of the present disclosure effectively improves the absorption efficiency of the blocked forward light by providing an annular light-absorbing groove inclined to the optical path on the inner wall of the first diverging hole of the spacial diaphragm.

In an embodiment, tapered surfaces of both sides of the annular light-absorbing groove and/or on the inner wall of the spacial diaphragm are provided with a concave structure or a light-absorbing thread, and are coated with a light-absorbing material.

In the embodiment of the present disclosure, a concave structure can be designed, a light-absorbing thread can be provided, and a light-absorbing material can be coated on the inner wall of the first diverging hole of the spacial diaphragm 204, the light-absorbing material such as a black temperature-resistant material is used for substantially absorbing the blocked forward light.

Further, in the embodiment of the present disclosure, it is also necessary to design a light-absorbing fine-tooth thread on the tapered surfaces on both sides of the annular light-absorbing groove 520, and after sandblasting or blackening the light-absorbing thread, it can effectively absorb most of the blocked laser, and only a small amount of unabsorbed forward laser becomes divergent light, which is scattered into the cavity of the laser cutting head 201, to effectively control the temperature of the laser cutting head 201.

In an embodiment, the spacial diaphragm 204 further includes a second diverging hole 522 provided on the optical path; the small-diameter end of the second diverging hole 522 is overlapped with the small-diameter end of the first diverging hole(collectively referred to as the small-diameter end 521 of the spacial diaphragm); the inner wall of the second diverging hole 522 is provided with a concave structure or a light-absorbing thread, and is coated with a light-absorbing material.

As shown in FIG. 6, except from adding an annular light-absorbing groove 520 for absorbing forward laser in the spacial diaphragm unit provided in the embodiment of the present disclosure, another side of the first diverging hole 519 is further provided with a reverse tapered surface, to form the second diverging hole 522, so as to realize the effective absorption of the reflected light, and also effectively reduce the requirement for the water-cooling capacity of the spacial diaphragm 204.

Further, the second diverging holes 522 may be textured to improve the absorption efficiency of reflected light. It should be noted that since the energy density of the reflected light is lower than that of the forward light, the light-absorbing requirements for the reflected light are not as high as those for the forward light, so in the embodiment of the present disclosure, the reversed tapered surface of the second diverging hole 522 is formed, which can absorb most of the reflected light, and the unabsorbed scattered light can be scattered into the cavity of the laser cutting head 201 without too much influence on its temperature rise.

In an embodiment, in order to effectively improve the absorption efficiency of the second diverging hole 522 for reflected light, a concave structure or a light-absorbing thread may also be provided and a light-absorbing material may be coated on the inner wall of the second diverging hole 522.

The laser output optical cable provided by the embodiment of the present disclosure can effectively absorb the trailing light, the forward scattered light and the reflected light from all direction and multiple stages by providing the spacial diaphragm as a multi-level structure consisting of the first diverging hole, the annular light-absorbing groove and the second diverging hole, which greatly reduces the incidental thermal effect of the nozzle, effectively improves the cutting effect, and ensures the safe operation of the laser equipment.

In an embodiment, the incident light focus of the collimation unit is overlapped with the virtual light-emitting point; the spacial diaphragm and the cutting head connector are integrally formed.

FIG. 3 is a schematic structural view of an inside of a spacial diaphragm according to the embodiments of the present disclosure. The spacial diaphragm 204 and the cutting head connector 202 are integrally formed, and the light hole of the spacial diaphragm 204 is that of the cutting head connector 202.

Due to the different divergence angles of the output light of different manufacturers and different laser models, a cutting head connector 202 with a diaphragm device can be intentionally provided at the end of the laser output head 203 for different models of lasers, cutting head connector 202 can be mated with or integrated with the laser output head 203. The cutting head connector 202 with a spacial diaphragm can be mated with mainstream cutting heads or welding heads.

In the specific design, it is necessary to ensure that after the connection, the virtual light-emitting point of the output head matches the collimation unit in the cutting head.

Since the divergence angles of different models of lasers are different, and the laser cutting head has a diaphragm unit between the connector joint and the collimation unit, but the spacial diaphragm of the same cutting head cannot be well mated with each manufacturer. For different models of lasers, it is necessary to design the corresponding spacial diaphragm and integrate it with the laser output head, which can effectively filter out the trailing energy that negatively affects the cutting effect.

In an embodiment, a heat dissipation structure with multiple water channel fins is provided on an outer wall of the spacial diaphragm.

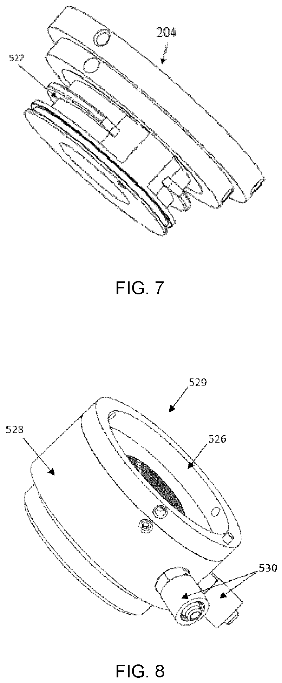

FIG. 7 is a schematic view of a water channel structure of the spacial diaphragm according to the embodiments of the present disclosure, FIG. 8 is a schematic structural view of a spacial diaphragm unit according to the embodiments of the present disclosure. As shown in FIG. 7 and FIG. 8, a water channel structure 527 is provided on the outer wall of spacial diaphragm 204. A water-cooling joint 530 for water in and out of the water channel is provided on it, and fins are provided in the water return channel to increase the heat dissipation area. It should be noted that the size and quantity of the fins shown in FIG. 8 are not considered to specifically limit the protection scope of the embodiments of the present disclosure.

In an embodiment, the laser output optical cable may also include a connection barrel 528 being of a hollow structure; the spacial diaphragm 204 is connected to the connection barrel 528 by set screws to form a spacial diaphragm unit 529; a water inlet and outlet are provided on a surface of the connection barrel 528, and a water-cooling joint 530 is provided at the water inlet and outlet; the spacial diaphragm unit 529 is detachably connected to the laser output head 203.

In an embodiment, the water channel structure 527 of the spacial diaphragm 204 shown in FIG .7 forms a mechanical seal with the connection barrel 528 through the sealers 524, 525. The end of the connection barrel 528 is provided with an external thread 523 for connecting to the laser cutting head 201; the spacial diaphragm 204 and the connection barrel 528 are radially limited by positioning pins, and the connector 537 and the cutting head connector 202 are radially limited by the positioning pins.

In an embodiment, as shown in FIG. 8, the spacial diaphragm 204 in the spacial diaphragm unit 529 is connected to the connection barrel 528 through screws, and the surface of the connection barrel 528 is provided with a water inlet and a water outlet, and the water-cooling joints 530 are provided at the water inlet and the water outlet.

The entire spacial diaphragm unit 529 is an independent component. In order to make it more convenient for customers to use, the spacial diaphragm unit 529 can be integrated with the output head connector 202, thus solving the connection problem between the spacial diaphragm unit 529 and the laser output head 203.

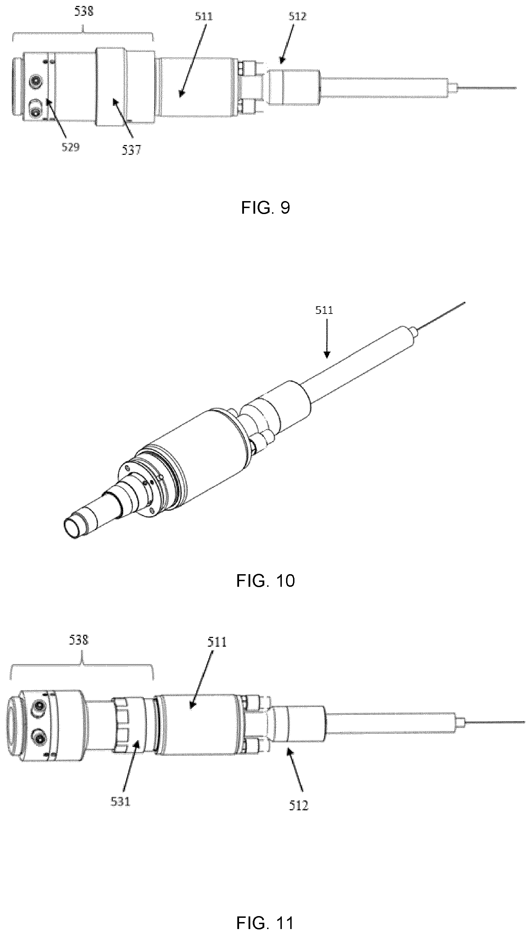

FIG. 9 is a schematic structural view of a connector integrated with the spacial diaphragm in an output optical cable according to the embodiments of the present disclosure, and FIG. 10 is a schematic structural view of a ten thousands watts high-power output optical cable according to the embodiments of the present disclosure. As shown in FIG. 9, after a conventional connector 537 mated with the ten thousand-watts high-power output head 511 is connected to the diaphragm unit 529, a connector 538 integrated with the spacial diaphragm is formed, while the connector 538 integrated with the spacial diaphragm is connected to the ten thousand-watts high-power output head 511, a new output optical cable 512 with the function of the spacial diaphragm is formed, which enables the conventional ten thousand-watts high-power output head to have the function of filtering out spacial light and achieves high-quality control of cutting light spot.

Further, in the ten thousand-watts high-power output head 511 shown in FIG. 10, a conventional connector is used, which has the advantage of fast and convenient assembly and disassembly of the output head.

Based on the above embodiment, in order to overcome the disadvantage of the high cost of the ten thousand-watts high-power output head 511 shown in FIG. 10, a new laser output optical cable is provided in an embodiment to reduce the cost of the new output optical cable integrated with the spacial diaphragm, and adopt a more simplified structure, which specifically includes a lock nut provided on the cutting head connector; an internal thread is provided inside the lock nut for matching and connecting with an external thread of the laser output head; a pin is provided at an end of the laser output head close to the cutting head connector; a pin hole corresponding to the pin is provided on a main controller of the cutting head connector.

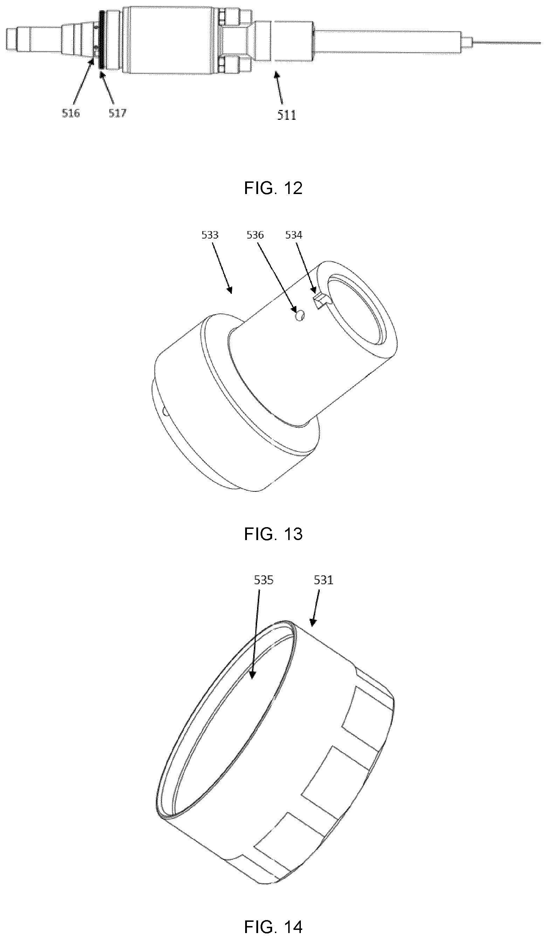

FIG. 11 is a schematic structural view of a simplified output optical cable integrated with a spacial diaphragm according to the embodiments of the present disclosure, FIG. 12 is a schematic structural view of the ten thousands watts high-power output optical cable with a simplified connection method according to the embodiments of the present disclosure, FIG. 13 is a schematic structural view of a main part of a cutting head according to the embodiments of the present disclosure, and FIG. 14 is a schematic structural view of a lock nut according to the embodiments of the present disclosure.

The ten thousand-watts high-power output head 511 shown in FIG. 12 is provided with an external thread 517 in the middle of its structure, a pin 516 is provided on the end surface, the main body 533 of the laser cutting head of the connector 538 integrated with the spacial diaphragm shown in FIG. 10 is designed with a more simplified joint, for example, a plurality of pin holes 536 are provided on the main body 533 of the laser cutting head shown in FIG. 13 to fix the pin and install the pin after sleeved with the lock nut 531 shown in FIG. 14 to limit the lock nut 531. The inside of the lock nut 531 is provided with an internal thread 535 for mating connection with the external thread 517 on the ten thousand-watts high-power output head 511.

When installing the ten thousand-watts high-power output head 511, the notch 534 of the main body 533 of the laser cutting head that matches the pin 516 is found for clamping; then the ten thousand-watts high-power output head 511 is fully extended into and attached to the inner of the connector 538 integrated with the spacial diaphragm, and finally the lock nut 531 is tightened, so that the ten thousand-watts high-power output head 511 is connected to the connector 538 integrated with the spacial diaphragm, to form a new output optical cable 515 integrated with the spacial diaphragm function.

The embodiments of the present disclosure provides a laser output optical cable integrated with the spacial diaphragm, which can be provided with the light-blocking divergence angle threshold according to a specific laser model, and can be controlled to output the beam, to effectively improve the cutting effect, and avoid the cumbersome operation of assembly and disassembly of the laser output head at the customer's site, and the joint part of the diaphragm unit only needs to be mated and connected with the cutting head.

The device embodiments described above are only illustrative, the units described as separate components may or may not be physically separated, and the components shown as units may or may not be physical units, that is, they may be located in one place, or they can be distributed to multiple network elements. Part or all of the modules can be selected according to actual needs to achieve the objective of the solution of this embodiment. It can be understood and implemented by those skilled in the art without any creative efforts.

Through the above description of the embodiments, those skilled in the art can clearly understand that each embodiment may be implemented by means of software plus a necessary general hardware platform, and of course also by hardware. Based on this understanding, the essence of the above technical solution or the part that contributes to the prior art can be embodied in the form of software products, and the computer software products can be stored in computer-readable storage media, such as read only memory(ROM) /random access memory(RAM), disk, compact disk, etc., including several instructions to make a computer device (which may be a personal computer, server, or network device, etc.) execute the methods described in the embodiments or some parts of the embodiments.

Finally, it should be noted that the above embodiments are only used to illustrate the technical solutions of the present disclosure, rather than limiting them. Although the present disclosure is described in detail with reference to the foregoing embodiments, those skilled in the art should understand that modifications may be made to the technical solutions described in the foregoing embodiments, since the scope of protection of the present invention is defined by the appended claims.

**Claims**

1. A laser output optical cable, comprising a power delivery fiber (402), a laser output head (203), a laser cutting head connector (202) and a laser cutting head (201), the power delivery fiber (402) and the laser cutting head connector (202) sequentially connected in an optical path, wherein the laser cutting head connector (202) connects the laser output head (203) and the laser cutting head (201), and the laser output head (203) comprises an end cap (401),

   whereby at least one spacial diaphragm (204) is provided in the laser cutting head connector (202);
   an aperture of the spacial diaphragm (204) is determined based on a distance between a virtual light-emitting point (403) and the spacial diaphragm (204) and a divergence angle of a laser output beam after passing through the end cap (401), wherein the laser output beam refers to a beam output from a laser; and
   the virtual light-emitting point (403) is determined based on a length of the end cap (401) in the optical path and the effective refraction rate of its material;
   a first diverging hole (519) is provided on and passed through the spacial diaphragm (204);
   the laser output beam is incident into a large-diameter end of the first diverging hole (519) along a radial line of the first diverging hole (519), and is emitted from a small-diameter end of the first diverging hole (519);
an aperture of the small-diameter end of the first diverging hole (519) is calculated by a formula:

$$D=2\times\tan\theta\times L;$$

wherein, D is the aperture of the small-diameter end of the first diverging hole (519); θ is the divergence angle of the laser output beam after passing through the end cap (401) corresponding to 98% to 100% of the total energy of the corresponding light spot in the beam; L is a distance from the virtual light-emitting point to the spacial diaphragm (204); and
an aperture of the large-diameter end of the first diverging hole (519) is smaller than an aperture of the cutting head connector (202).

2. The laser output optical cable of claim 1, wherein at least one annular light-absorbing groove (520) is provided in a middle of an inner wall of the spacial diaphragm (204), and the annular light-absorbing groove (520) is inclined at a preset angle to the optical path.

3. The laser output optical cable of claim 2, wherein tapered surfaces of both sides of the annular light-absorbing groove (520) and/or an inner wall of the spacial diaphragm (204) are provided with a concave structure or a light-absorbing thread, and are coated with a light-absorbing material.

4. The laser output optical cable of claim 1, wherein the spacial diaphragm (204) further comprises a second diverging hole (522) provided in the optical path;

   a small-diameter end of the second diverging hole (522) is overlapped with the small-diameter end of the first diverging hole (519); and
   an inner wall of the second diverging hole (522) is provided with a concave structure or a light-absorbing thread, and is coated with a light-absorbing material.

5. The laser output optical cable of claim 1, wherein an incident light focus of a collimation unit is overlapped with the virtual light-emitting point (403), and the spacial diaphragm (204) is integrally with the cutting head connector (202).

6. The laser output optical cable of claim 1, wherein a heat dissipation structure with multiple water channel fins is provided on an outer wall of the spacial diaphragm (204).

7. The laser output optical cable of claim 1, further comprising:

a connection barrel (528) being of a hollow structure;

wherein the spacial diaphragm (204) is connected to the connection barrel (528) by set screws to form a spacial diaphragm unit (529);

a water inlet and a water outlet are provided on a surface of the connection barrel (528), and a water-cooling joint (530) is provided at each of the water inlet and the water outlet; and

the spacial diaphragm unit (529) is detachably connected to the laser output head (203).

8. The laser output optical cable of claim 1, further comprising:

a lock nut (531) provided on the cutting head connector (202);

wherein an internal thread is provided inside the lock nut (531) for matching with an external thread of the laser output head (517);

a pin (516) is provided at an end of the laser output head (203) close to the cutting head connector (202); and

a main controller of the cutting head connector (202) is provided with a pin (516) hole corresponding to the pin (516).

## Patentansprüche

1. Lichtleiterkabel zur Laserausgabe, umfassend eine Leistungsübertragungsfaser (402), einen Laserausgangskopf (203), einen Laserschneidkopf-Verbinder (202) und einen Laserschneidkopf (201), wobei die Leistungsübertragungsfaser (402) und der Laserschneidkopf-Verbinder (202) in einem optischen Weg nacheinander verbunden sind, wobei der Laserschneidkopf-Verbinder (202) den Laserausgangskopf (203) und den Laserschneidkopf (201) verbindet und der Laserausgangskopf (203) eine Endkappe (401) umfasst,

wobei mindestens eine Raumblende (204) in dem Laserschneidkopf-Verbinder (202) vorgesehen ist;

wobei ein Öffnungsdurchmesser der Raumblende (204) auf Grundlage eines Abstands zwischen einem virtuellen Lichtemissionspunkt (403) und der Raumblende (204) sowie eines Divergenzwinkels eines Laserausgangsstrahls nach Durchlaufen der Endkappe (401) bestimmt wird, wobei sich der Laserausgangsstrahl auf einen von einem Laser ausgegebenen Strahl bezieht; und

wobei der virtuelle Lichtemissionspunkt (403) auf der Grundlage der Länge der Endkappe (401) im optischen Weg und des effektiven Brechungsindex ihres Materials bestimmt wird;

wobei eine erste divergierende Öffnung (519) an der Raumblende (204) vorgesehen ist und durch diese hindurchgeht;

wobei der Laserausgangsstrahl entlang einer radialen Linie der ersten divergierenden Öffnung (519) in ein Ende mit großem Durchmesser der ersten divergierenden Öffnung (519) einfällt und aus einem Ende mit kleinem Durchmesser der ersten divergierenden Öffnung (519) austritt;

wobei ein Öffnungsdurchmesser des Endes mit kleinem Durchmesser der ersten divergierenden Öffnung (519) nach folgender Formel berechnet wird:

$$D = 2 \times \tan\theta \times L;$$

wobei D der Öffnungsdurchmesser des Endes mit kleinem Durchmesser der ersten divergierenden Öffnung (519) ist; θ der Divergenzwinkel des Laserausgangsstrahls nach Durchlaufen der Endkappe (401) ist, der 98 % bis 100 % der Gesamtenergie des entsprechenden Lichtflecks in dem Strahl entspricht; L ein Abstand von dem virtuellen Lichtemissionspunkt zu der Raumblende (204) ist; und

wobei ein Öffnungsdurchmesser des Endes mit großem Durchmesser der ersten divergierenden Öffnung (519) kleiner ist als ein Öffnungsdurchmesser des Schneidkopf-Verbinders (202).

2. Lichtleiterkabel zur Laserausgabe nach Anspruch 1, wobei mindestens eine ringförmige Lichtabsorptionsnut (520) in einem mittleren Bereich einer Innenwand der Raumblende (204) vorgesehen ist und die ringförmige Lichtabsorptionsnut (520) in einem vorgegebenen Winkel gegenüber dem optischen Weg geneigt ist.

3. Lichtleiterkabel zur Laserausgabe nach Anspruch 2, wobei konische Flächen auf beiden Seiten der ringförmigen Lichtabsorptionsnut (520) und/oder eine Innenwand der Raumblende (204) mit einer konkaven Struktur oder einem lichtabsorbierenden Gewinde versehen und mit einem lichtabsorbierenden Material beschichtet sind.

4. Lichtleiterkabel zur Laserausgabe nach Anspruch 1, wobei die Raumblende (204) ferner eine zweite divergierende Öffnung (522) umfasst, die in dem optischen Weg vorgesehen ist;

wobei ein Ende mit kleinem Durchmesser der zweiten divergierenden Öffnung (522) mit dem Ende mit kleinem Durchmesser der ersten divergierenden Öffnung (519) zusammenfällt; und

wobei eine Innenwand der zweiten divergierenden Öffnung (522) mit einer konkaven Struktur oder einem lichtabsorbierenden Gewinde versehen und mit einem lichtabsorbierenden Material beschichtet ist.

5. Lichtleiterkabel zur Laserausgabe nach Anspruch 1, wobei ein Einfallslichtfokus einer Kollimationseinheit mit dem virtuellen Lichtemissionspunkt (403) zusammenfällt und die Raumblende (204) einstückig mit dem Schneidkopf-Verbinder (202) ausgebildet ist.

6. Lichtleiterkabel zur Laserausgabe nach Anspruch 1, wobei eine Wärmeableitstruktur mit mehreren Wasserkanalrippen an einer Außenwand der Raumblende (204) vorgesehen ist.

7. Lichtleiterkabel zur Laserausgabe nach Anspruch 1, ferner umfassend:

eine Verbindungshülse (528), die eine hohle Struktur aufweist;

wobei die Raumblende (204) durch Stellschrauben mit der Verbindungshülse (528) verbunden ist, um eine Raumblendeneinheit (529) zu bilden;

wobei ein Wassereinlass und ein Wasserauslass an einer Oberfläche der Verbindungshülse (528) vorgesehen sind und jeweils an dem Wassereinlass und dem Wasserauslass ein Wasserkühlanschluss (530) vorgesehen ist; und

wobei die Raumblendeneinheit (529) lösbar mit dem Laserausgangskopf (203) verbunden ist.

8. Lichtleiterkabel zur Laserausgabe nach Anspruch 1, ferner umfassend:

eine Sicherungsmutter (531), die an dem Schneidkopf-Verbinder (202) vorgesehen ist;

wobei ein Innengewinde im Inneren der Sicherungsmutter (531) vorgesehen ist, um mit einem Außengewinde des Laserausgangskopfs (517) zusammenzupassen;

wobei ein Stift (516) an einem Ende des Laserausgangskopfs (203) in der Nähe des Schneidkopf-Verbinders (202) angeordnet ist; und

wobei ein Hauptsteuerelement des Schneidkopf-Verbinders (202) mit einem dem Stift (516) entsprechenden Stiftloch versehen ist.

## Revendications

1. Câble optique à sortie laser, comprenant une fibre de distribution de puissance (402), une tête de sortie laser (203), un connecteur pour tête de découpe laser (202) et une tête de découpe laser (201), la fibre de distribution de puissance (402) et le connecteur pour tête de découpe laser (202) étant connectés par séquence dans un trajet optique, dans lequel le connecteur pour tête de découpe laser (202) connecte la tête de sortie laser (203) et la tête de découpe laser (201), et la tête de sortie laser (203) comprend un capuchon en bout (401),

dans lequel au moins un diaphragme spatial (204) est prévu dans le connecteur pour tête de découpe laser (202) ;

une ouverture du diaphragme spatial (204) est déterminée sur la base d'une distance entre un point lumineux virtuel (403) et le diaphragme spatial (204) et d'un angle de divergence d'un faisceau sorti laser après avoir passé par le capuchon en bout (401), le faisceau sorti laser faisant référence à un faisceau sorti à partir d'un laser ; et

le point lumineux virtuel (403) est déterminé sur la base d'une longueur du capuchon en bout (401) dans le trajet optique et de l'indice de réfraction effectif de son matériau ;

un premier trou de divergence (519) est prévu sur et passé par le diaphragme spatial (204) ;

le faisceau sorti laser est incident dans une extrémité à grand diamètre du premier trou de divergence (519) le long d'une ligne radiale du premier trou de divergence (519), et est émis à partir d'une extrémité à petit diamètre du premier trou de divergence (519) ;

une ouverture de l'extrémité à petit diamètre du premier trou de divergence (519) est calculée selon la formule suivante :

$$D = 2 \times \tan\theta \times L \; ;$$

où D est l'ouverture de l'extrémité à petit diamètre du premier trou de divergence (519) ; θ est l'angle de divergence du faisceau sorti laser après avoir passé par le capuchon en bout (401) correspondant à 98 % à 100 % de l'énergie totale du point lumineux correspondant dans le faisceau ; L est une distance du point lumineux virtuel au diaphragme spatial (204) ; et

une ouverture de l'extrémité à grand diamètre du premier trou de divergence (519) est inférieure à une ouverture du connecteur pour tête de découpe (202).

2. Câble optique à sortie laser selon la revendication 1, dans lequel au moins une rainure annulaire d'adsorption de la lumière (520) est prévue au milieu d'une paroi interne du diaphragme spatial (204), et la rainure annulaire d'adsorption de la lumière (520) est inclinée d'un angle prédéfini par rapport au trajet optique.

3. Câble optique à sortie laser selon la revendication 2, dans lequel des surfaces coniques de deux côtés de la rainure annulaire d'adsorption de la lumière (520) et/ou une paroi interne du diaphragme spatial (204) sont pourvues d'une structure concave ou d'un fil d'adsorption de la lumière, et sont revêtues d'un matériau d'adsorption de la lumière.

4. Câble optique à sortie laser selon la revendication 1, dans lequel le diaphragme spatial (204) comprend en outre un second trou de divergence (522) prévu dans le trajet optique ;

   une extrémité à petit diamètre du second trou de divergence (522) est superposée à l'extrémité à petit diamètre du premier trou de divergence (519) ; et
   une paroi interne du second trou de divergence (522) est pourvue d'une structure concave ou d'un fil d'adsorption de la lumière, et est revêtue d'un matériau d'adsorption de la lumière.

5. Câble optique à sortie laser selon la revendication 1, dans lequel un foyer de lumière incidente d'une unité de collimation est superposé au point lumineux virtuel (403), et le diaphragme spatial (204) est intégré au connecteur pour tête de découpe (202).

6. Câble optique à sortie laser selon la revendication 1, dans lequel une structure de dissipation thermique avec plusieurs ailettes de canal d'eau est prévue sur une paroi externe du diaphragme spatial (204).

7. Câble optique à sortie laser selon la revendication 1, comprenant en outre :

   un manchon de connexion (528) présentant une structure creuse ;
   dans lequel le diaphragme spatial (204) est connecté au manchon de connexion (528) par en serrant des vis pour former une unité de diaphragme spatial (529) ;
   une entrée d'eau et une sortie d'eau sont prévues sur une surface du manchon de connexion (528), et un joint de refroidissement par eau (530) est prévu à chacune de l'entrée d'eau et de la sortie d'eau ; et
   l'unité de diaphragme spatial (529) est connectée de manière amovible à la tête de sortie laser (203).

8. Câble optique à sortie laser selon la revendication 1, comprenant en outre :

un écrou de verrouillage (531) prévu sur le connecteur pour tête de découpe (202) ;
dans lequel un filetage interne est prévu à l'intérieur de l'écrou de verrouillage (531) pour s'adapter à un filetage externe de la tête de sortie laser (517) ;
une goupille (516) est prévue à une extrémité de la tête de sortie laser (203) proche du connecteur pour tête de découpe (202) ; et

un contrôleur principal du connecteur pour tête de découpe (202) est pourvu d'un trou pour goupille (516) correspondant à la goupille (516).

FIG. 1

FIG. 2

FIG. 3

FIG. 4

EP 4 212 277 B1

FIG. 5

FIG. 6

FIG. 7

FIG. 8

FIG. 9

FIG. 10

FIG. 11

FIG. 12

FIG. 13

FIG. 14

**EP 4 212 277 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200124806 A1
- CN 210334786 U